# EUROPEAN PATENT SPECIFICATION

(11) **EP 2 546 624 B1**
(45) Date of publication and mention of the grant of the patent: **29.11.2017**
(21) Application number: 11005804.7
(22) Date of filing: 15.07.2011
(51) Int. Cl.: G01K 11/00, G01K 13/06, H05B 6/64, H05B 6/78

(54) **Heat-treatment device comprising a shielded microwave-radiometry-antenna**
Wärmebehandlungsvorrichtung, die eine abgeschirmte Antenne zur Mikrowellenstrahlungsmessung umfasst
Dispositif de traitement thermique comportant une antenne de radiométrie à micro-ondes blindée

(43) Date of publication of application: 16.01.2013
(73) Proprietor: GEA Food Solutions Bakel B.V., 5761 EN Bakel (NL)
(72) Inventor: Van Rens, Joseph Johan Maria, 6003 BK Weert (NL)
(74) Representative: Wolff, Felix

(56) References cited:
- EP-A2- 2 295 945
- FR-A1- 2 705 441
- FR-A1- 2 880 114
- US-A- 3 881 403
- US-A1- 2003 026 320

## Description

The present invention relates to a heat-treatment-device for preferably protein containing products, which are transported by a transportation means through the device and past at least one microwave-radiometer-antenna.

Food products, especially protein containing food products, such as meat, fish or the like, are often heat treated, for example cooked or fried. In industrial applications, this heat treatment takes place in a heat-treatment device, for example an oven, which comprises a transportation means, for example a belt, preferably an endless belt, which moves the products through the heat treatment device, where they are subjected to heat. In many cases, several products are transported side by side, in parallel rows, or in an arbitrary arrangement, through the heat treatment device. Since the temperature-distribution over the width of the oven, the products and/or the heat-transfer in the oven are not uniform, the pasteurization of the individual product is also not uniform, which is, however, often undesired. It is especially undesired to have products with a too low core temperature and/or overcooked products. In order to overcome this problem, there are heat treatment devices with product temperature measurements known from the state in the art. However, these temperature readings are too inaccurate to precisely control the heating conditions in the heat treatment device.

FR2880114 discloses a heat-treatment device for protein containing products comprising a transportation means for transporting said protein containing products through the device and past at least one microwave radiometer antenna, wherein the microwave radiometer antenna is located in shielding means which are stationary and extend at least partially around the cross-section of the transportation means and are adapted to at least partially isolate the microwave radiometer antenna from external sources of microwave electromagnetic radiation.

EP2295945 discloses another heat-treatment device for protein containing products.

It is therefore the objective of the present invention to provide a heat-treatment-device that does not comprise the deficiencies according to the state of the art.

The objective is attained with a heat-treatment-device for protein containing products according to claim 1. The present invention relates to a heat treatment device, which transfers heat to a protein containing product. A protein containing product is especially meat, for example from swine, cow, chicken, lamb as well as fish or dary-products. However, the product can also be, for example, any other food, like vegetables, fruit or the like. The meat may comprise bones or fish-bones. The meat is preferably processed, for example minced, marinated, spiced and/or battered. This heat treatment device can be for example an oven, a fryer or a thawing-apparatus. Preferably, this heat treatment device is an oven that heats products by radiation, natural- and/or forced convection. Vapor can be added to the heat treatment device if needed to adjust the relative humidity in the heat treatment device and/or to influence the heat transfer. This heat treatment device can be operated continuously or batchwise, whereas a continuous operation is preferred. Preferably, the heat treatment device comprises several chambers in which different heat-treatment-conditions and/or environments are maintained. The heat treatment device comprises preferably means to control different parameters such as the temperature, the relative humidity and/or the heat transfer conditions in the heat treatment device. In a preferred embodiment vacuum is applied to the heat treatment device, particularly in case the heat treatment device is a thawing-apparatus.

According to the present invention, the heat treatment device comprises transportation means, for example a belt, especially an endless belt, which transports products to be heated through the heat treatment device. The path of the transportation means can be straight and/or curved, for example arranged at least partially helically. The transportation means preferably has a width, i.e. the extension perpendicular to the transport direction, which is large enough to place several products side by side, which are then transported in parallel through the heat treatment device. The product can, however, also be placed at random on the belt, for example in case of manual loading. The transportation means can, at least partially, be made from a material that absorbs and/or reflects electromagnetic radiation, particularly radio frequencies (RF).

According to the present invention, the heat treatment device comprises at least one microwave-radiometer-antenna, which receives electromagnetic radiation emitted by the individual product and transmits the signal to a device which transfers the measured signal into a temperature of the product on the transportation means. Preferably, the electromagnetic radiation received by the antenna and its analysis allows the determination of the core temperature of the product, i.e. the temperature in the middle of the product and not the surface temperature. Preferably, the microwave-radiometer-antenna is placed above the transportation means, to measure the temperature of the products, which pass by below this antenna. The antenna is preferably stationary. The antenna is preferably located near the exit of the heat treatment device and/or outside, downstream of the heat treatment device. Both locations allow to determine the core temperature to which the product has been heated. This temperature-reading allows, for example, to control the heating process. Additionally or alternatively, the antenna is preferably located near the entrance of the heat treatment device and/or outside upstream of the heat treatment device. Both locations allow to determine the initial core temperature prior to heating the product. This temperature also allows, for example to control the heating process. The person skilled in the art understands that preferably the initial core temperature and the final temperature after the heat treatment are used to control the treatment process.

In a preferred embodiment of the present invention, at least two antennas are placed above the transportation means. These antennas preferably measure the core temperature of the products, preferably in the vicinity of the left hand side and in the vicinity of the right hand side of the transportation means relative to the transport direction of the belt, which are transported past the antennas.

In another preferred embodiment, one antenna is placed above each row of products. Each of these antennas measures the temperature, preferably the core temperature, of the consecutive products arranged in the respective row.

According to the present invention, each antenna, at least its area that receives, seers", the microwave radiation, is located inside a shielding means, which extends at least partially, preferably entirely, around the cross-section of the transportation means and at least partially, preferably entirely, isolates the microwave-radiometer-antenna from external sources of electromagnetic radiation, particularly microwaves and/or radio frequencies (RF). Due to this shielding, the antenna receives only electromagnetic radiation emitted by the product. Thus, the measurement is much more accurate than measurements according to the state of the art, even though the products continuously move past the antenna. Preferably the shielding means are designed such that even radiation emitted by the neighboring products, particularly the products upstream and/or downstream of the product currently measured is at least reduced by the shielding means.

Thus, the transportation means, with the product on it, pass below, preferably through, the shielding means, in which the antenna is located.

The shielding means assures that only the microwave radiation from the product is received by the antenna, even though the products are continuously transported past the antenna. The shielding means absorb and/or reflect electromagnetic radiation, particularly microwaves and/or radio frequencies, at least partially.

The shielding means, for example a box, is stationary and preferably comprises no moving parts, particularly no parts which have to be moved before during or after one or more measurements. The shielding means is preferably, at least partially, made from a material which shields electromagnetic radiation, particularly radio frequencies. Preferably, this material is an electrical conductor and/or a magnetic material. Preferably, the material is applied to the shielding means as a layer.

According to the present invention, the microwave-radiometer-antenna is located , at least its area that receives, "sees", the microwave radiation, inside a shielding means, which comprises two slots through which the transportation means are guided. The shielding means at least partially isolates the microwave-radiometer-antenna from external sources of electromagnetic radiation. The slot preferably extends around the entire circumference of the cross-section of the transportation means, particularly the belt. The shielding means preferably cover the transportation means from all sides. The transportation means, with products on their surface move through the shielding means in which one or more antennas are located, each measuring the electromagnetic radiation emitted by the respective product transported by the transportation means. The width of the slots corresponds essentially to the width of the transportation means perpendicular to its direction of motion. The height of the slots is chosen as small as possible, but large enough that the transportation means plus the product on them can pass through the slots. Preferably the height is smaller than 150 mm. According to the present invention, the height of the slot is adjustable to the product which is currently processed in the heat treatment device.

In a preferred embodiment, the heat-treatment-device comprises tunnels at its inlet and/or its outlet. This tunnel extends in the transport direction of the transportation means and preferably has at least essentially the same inner dimensions as the slot. Preferably, the tunnel extends, preferably over its entire length, around the circumference of the cross section of the transportation means, preferably the endless belt. The tunnel is preferably stationary and more preferably comprises no moving parts, particularly no parts which have to be moved before during or after one or more measurements. The tunnel is preferably, at least partially, made from a material which shields electromagnetic radiation, particularly radio frequencies. Preferably, this material is an electrical conductor and/or a magnetic material. Preferably, the material is applied to the shielding means as a layer.

In a preferred embodiment, the tunnel comprises reflection- and/or absorption means at its inner surface to at least partially eliminate radiation from external sources that has entered the tunnel through the inlet or the outlet. This reflection- and/or absorption means avoids that this electromagnetic radiation reaches the antenna.

According to another preferred embodiment, the shielding is counter electromagnetic radiation that at least partially neutralizes the electromagnetic radiation from the external source. A measurement device measures the electromagnetic radiation that is emitted by external sources, i.e. not the product to be measured and a device emits counter radiation which has the same wavelength but a reciprocal amplitude. This counter radiation reduces the undesired electromagnetic radiation at least close to zero.

According to a preferred embodiment of the present invention, the heat treatment device comprises means to influence the heat treatment process. Such means can be, for example, means to alter the temperature, means to influence the heat transfer, means to provide radiation, residence time of the product in the heating device and/or means to alter the relative humidity of the environment around the products. These means can be used to provide uniform heat treatment conditions over the entire widths of the transportation means or to provide non uniform heat treatment conditions, in case, the number of products per unit area on the transportation means differs as a function of the width of the transportation means. In this case, it can be desirable, to provide more heating energy and/or more efficient heat transfer in the area with more products per unit area than in the area with less products per unit area. Theses means to influence the heat treatment process are, in a preferred embodiment of the present invention, controlled according to the signal of the antenna. This antenna is for example placed at or near the entrance and/or the exit of the heat treatment device, for example the oven, and measures the initial and/or final core-temperature of the individual product. Based on this measurement, the heat treatment process is altered, to achieve an optimal core-temperature.

In another preferred embodiment, the device comprises means to track the position of the individual product. This means can be for example an XY tracking system and is for example useful to know where an individual product is at a certain instant of time. This information can be for example used to sort out products for example by a Pick and Place Robot, which do not meet certain quality criteria especially which do not meet a certain core temperature; i.e. if the core temperature is either too high or too low, these products are sorted out by the Pick and Place Robot. This robot needs the XY coordinates of this product to be sorted out, in order to pick the right product from the transportation means.

In another preferred embodiment, the temperature information acquired by the antenna is stored in storing means. This information can be for example used as a quality control function to document how the individual product has been heat-treated in the heat treatment process. According to another preferred embodiment, this information is transferred to storing means, for example a transponder, which is attached to a packaging or the like in which the product is placed and packed. In case of a quality problem, the information can be directly read out of this transponder and is available to the merchandiser or the customer.

According to a preferred embodiment or another embodiment of the present invention, the heat treatment device comprises product detection means, which are located upstream of the heat treatment device. These means can be used to at least partially turn the heat treatment device on and off. In case, that no products are on the transportation means, the heat treatment device is at least partially turned off. However, as soon as theses detections means identify a product, the heat treatment device is turned on again well before the product arrives at the heat treatment device. With this preferred or inventive embodiment of the present invention, energy of the heat treatment process can be saved.

Preferably, the microwave-radiometry-antenna has a receiving area, i.e. an effective area, of 0,1 - 180 mm². This area preferably faces the product directly and/or is preferably directly opposite of the surface of the product. Preferably, this area is at the tip of a pin-like device.

An antenna with a receiving area of 0,1 -180 mm², measures the core temperature of a protein containing substance very precisely. The receiving area is the area of the antenna, which receives the microwave radiation emitted by a product. The core temperature is the temperature, averaged over the height z of the product essentially directly under the antenna.

The antenna does not touch the product, but is placed in the direct vicinity of the product to receive the microwave radiation emitted by the product.

Preferably, the effective area is 0,1 - 70 mm², more preferably 0,1 - 40 mm² and most preferably 0,1 - 20 mm².

The effective area may have any shape. However, preferably, the receiving area is circular. In a preferred embodiment of the present invention, the effective area has a diameter of 0,35 - 15,1 mm, more preferably 0,35 - 9,4 mm, even more preferably 0,35 - 7,13 mm, even more preferably 0,35 - 5,0 mm.

Preferably, the antenna and the accompanying electronics detects and analyzes microwaves in a frequency band between 1 -7 GHz, whereas low frequencies around a frequency band between 2 - 4 GHz are more preferred and a frequency band between 2,8 and 3,2 GHz is most preferred. In an even more preferred embodiment the frequencies received and analyzed by the antenna and the accompanying electronics is altered during one measurement, whereas low frequencies provide information about the temperature deep inside the product and higher frequencies information about the temperature of product nearer to the surface.

The inventions are now explained according to Figures 1-3. These explanations do not limit the scope of protection.
Figure 1 shows the antenna of the heat treatment device.
Figure 2 shows the measurement principle
Figure 3 shows the shielding of the antenna.

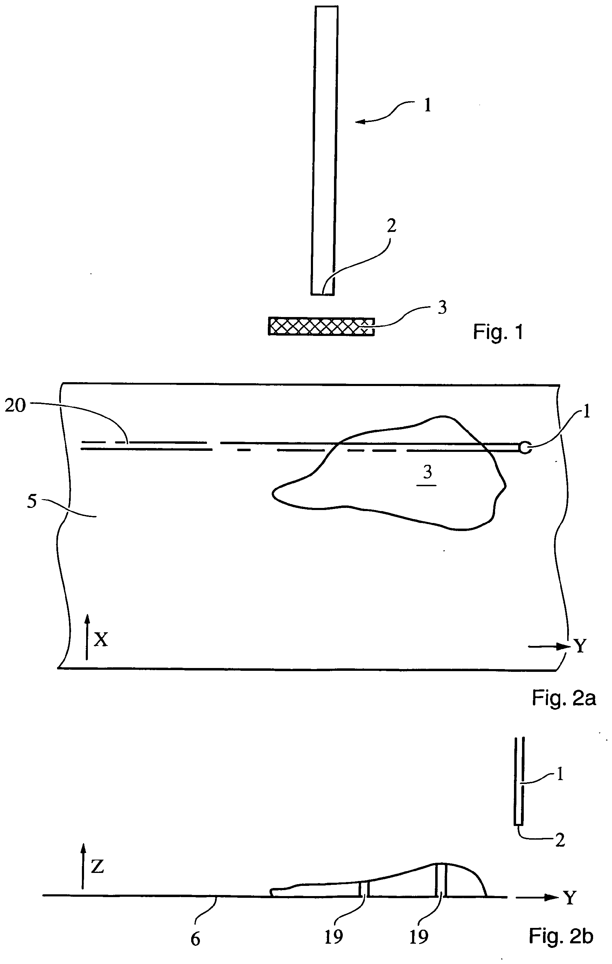

**Figure 1** shows a microwave radiometry antenna, which has a receiving area 2, the effective area, which is directed towards the product 3 and receives, "sees" the electromagnetic radiation emitted by the product. The product 3 is in the present case a piece of meat, which is subjected to a heat treatment. In the present case, the receiving area is a circle with a diameter of six millimeters. The receiving area is here essentially parallel to the surface of the product adjacent to the antenna. The antenna is electrically and electronically connected to analyzing means, which are not shown. In the present case, the antenna and/or the accompanying electronics comprises a filter that allows microwaves in a band width of 2-4 GHz to pass. The connected electronics analyses this received microwave radiation and calculates the core temperature of the product 3; i.e. the temperature in the center of product 3.

**Figure 2** depicts the measurement principle of the present invention. Figure 2a is a top-view of a transportation belt 5 that moves from the left to the right. Above the belt, an antenna 1 is arranged, whose receiving area 2 is directed towards the belt 6. On the belt 6, a food product is placed and transported past the antenna 1. The antenna measures the core temperature of product within the measurement path 20. Since the receiving area 2 of the antenna is very small, the temperature measured is exactly the core temperature of the product in this path and not the temperature over the entire product in x-direction. As can be seen in figure 2b, which is a side-view of the depiction according to figure 2a, in this measurement path, the temperature is measured at several, here two, discrete points 19, which can, however have such a small distance, that a semi-continuous measurement is achieved. At every measurement point, the mean temperature of the product under the receiving area is determined. The person skilled in the art understands that in case several antennas are placed side by side a very exact temperature map of the product can be determined.

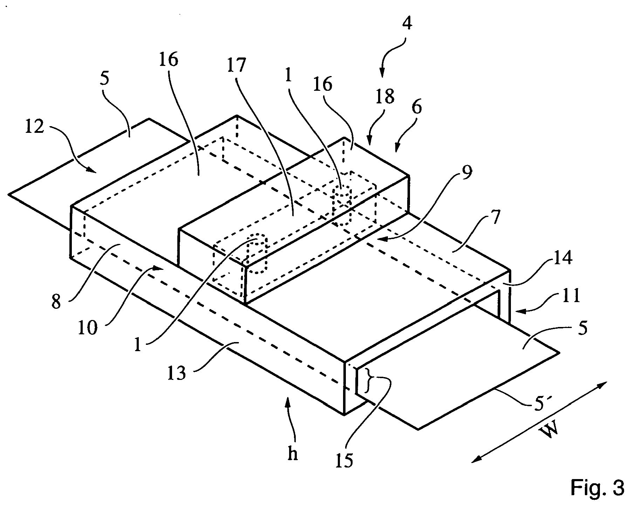

**Figure 3** depicts the inventive heat treatment device 4. The heat treatment device is for example an oven. This heat treatment device comprises transportation means 5, here an endless belt, which transports protein containing products (not depicted) through the heat treatment device, where they are subjected to heat to cook, fry or treat the surface of the protein containing products. This transportation means 5 also transport the products past at least one, here two microwave radiometry antennas 1. The antennas 1 measure the temperature of two different products which are distributed over the width w of the belt. Each antenna measures the core temperature of one product; i.e. the temperature inside the product. Each antenna 1 is located in a shielding device 6, here a box 18. The box extents entirely around the cross-section 5' of the transportation means 5, i.e. its sidewalls 13, 14, its bottom 15 and its upper part 16 extend around the transportation means 5. The box 18 comprises slots 9, 10 at its inlet and outlet through which the transportation means and the products are guided. The box is stationary and does not comprise any moving parts. In the present example, the antennas 1 are located in a chamber 17, which is open towards the transportation means. The chamber, which is not mandatory, allows to channel the radiation received by the antenna so that the products upstream or downstream of the product currently analyzed does not influence the actual measurement. In the present case, the box 18 comprises a lining which comprises RF-shielding properties so that an external electromagnetic radiation source does not influence the reading of the antennas 1. However, the box can also be made from a sheet with RF-shielding properties, for example iron, stainless steel, aluminum, copper or the like. Upstream and/or downstream of the box 18, the shielding device 6 preferably comprises a tunnel 7, 8, which preferably extends around the entire circumference 5' of the transportation means 5. The width w of the box and/or the tunnel 7, 8 is preferably essentially the width of the transportation means 5. The height h is preferably chosen as small as possible. In the present case height h is less than 150 mm. This allows the transportation means plus the product to pass through the tunnel 7, 8. Each tunnel 7, 8 avoids that electromagnetic radiation enters into box 18. The material from which each tunnel is made also comprises RF-shielding properties. If needed, each tunnel may comprise at its inside means to absorb and/or reflect electromagnetic radiation that has entered the tunnel.

### List of reference signs:

- 1: microwave-radiometry-antenna
- 2: receiving area
- 3: product
- 4: heat treatment device
- 5: transportation means
- 5': cross section of the transportation means
- 6: shielding means, box
- 7, 8: tunnel
- 9, 10: slot
- 11: inlet of the shielding means
- 12: outlet of the shielding means
- 13, 14: sidewall of the box or the tunnel
- 15: bottom of the box or the sidewall
- 16: upper part
- 17: chamber
- 18: box
- 19: discrete measurement points
- 20: measurement path

## Claims

1. Heat-treatment-device (4) for protein containing products, comprising a transportation means (5) for transporting said protein containing products through the device (4) and past at least one microwave-radiometer-antenna (1), wherein the microwave-radiometer-antenna (1) is located in shielding means (6), which are stationary and extend at least partially around the cross-section (5') of the transportation means (5) and are adapted to at least partially isolate the microwave-radiometer-antenna (2) from external sources of microwave electromagnetic radiation,
**characterized in that**
the at least one antenna is located in a chamber which is open towards the transportation means and which is adapted to channel the radiation received by the antenna wherein the shielding means (6) comprises two slots (9, 10) at its inlet and outlet through which the transportation means (1) are guided and wherein the height of the slot is adjustable to the product which is currently processed in the heat treatment device.

2. Heat-treatment-device according to claim 1, **characterized in that** the shielding means (6) extend around the entire cross-section (5') of the transportation means.

3. Heat-treatment-device according to one of the preceding claims, **characterized in that** the transportation means is a belt.

4. Heat-treatment-device according to one of the preceding claims, **characterized in that** the shielding means (6) is at least partially made from a material that reflects and/or absorbs electromagnetic radiation.

5. Heat-treatment-device according to one of the preceding claims, **characterized in that** the transportation means (5) is at least partially made from a material that reflects and/or absorbs electromagnetic radiation.

6. Heat-treatment-device according to one of the preceding claims, **characterized in that** the shielding means (6) comprises a tunnel which preferably extends around the entire circumference (5') of the transportation means (5).

7. Heat-treatment-device according to claim 6, **characterized in that** the tunnel comprises reflection- and/or absorption means at its inner surface.

## Patentansprüche

1. Wärmebehandlungsvorrichtung (4) für proteinhaltige Produkte, umfassend ein Transportmittel (5) zum Transportieren der proteinhaltigen Produkte durch die Vorrichtung (4) und vorbei an mindestens einer Mikrowellen-Radiometer-Antenne (1), wobei sich die Mikrowellen-Radiometer-Antenne (1) in Abschirmmitteln (6) befindet, die stationär sind und sich mindestens teilweise um den Querschnitt (5') des Transportmittels (5) herum erstrecken und dafür ausgelegt sind, die Mikrowellen-Radiometer-Antenne (2) zumindest teilweise von externen Quellen von elektromagnetischer Mikrowellenstrahlung zu isolieren, **dadurch gekennzeichnet, dass**
sich die mindestens eine Antenne in einer Kammer befindet, die zum Transportmittel hin geöffnet ist und die ausgelegt ist zum Kanalisieren der von der Antenne empfangenen Strahlung, wobei das Abschirmmittel (6) zwei Schlitze (9, 10) an ihrem Einlass und Auslass umfasst, durch welche die Transportmittel (1) geführt werden und wobei die Höhe des Schlitzes auf das Produkt einstellbar ist, das aktuell in der Wärmebehandlungsvorrichtung verarbeitet wird.

2. Wärmebehandlungsvorrichtung nach Anspruch 1, **dadurch gekennzeichnet, dass** sich die Abschirmmittel (6) um den gesamten Querschnitt (5') des Transportmittels herum erstrecken.

3. Wärmebehandlungsvorrichtung nach einem der vorhergehenden Ansprüche, **dadurch gekennzeichnet, dass** das Transportmittel ein Förderband ist.

4. Wärmebehandlungsvorrichtung nach einem der vorhergehenden Ansprüche, **dadurch gekennzeichnet, dass** das Abschirmmittel (6) mindestens teilweise aus einem Material hergestellt ist, das elektromagnetische Strahlung reflektiert und/oder absorbiert.

5. Wärmebehandlungsvorrichtung nach einem der vorhergehenden Ansprüche, **dadurch gekennzeichnet, dass** das Transportmittel (5) mindestens teilweise aus einem Material hergestellt ist, das elektromagnetische Strahlung reflektiert und/oder absorbiert.

6. Wärmebehandlungsvorrichtung nach einem der vorhergehenden Ansprüche, **dadurch gekennzeichnet, dass** das Abschirmmittel (6) einen Tunnel umfasst, der sich bevorzugt um den gesamten Umfang (5') des Transportmittels (5) herum erstreckt.

7. Wärmebehandlungsvorrichtung nach Anspruch 6, **dadurch gekennzeichnet, dass** der Tunnel an dessen Innenoberfläche Reflexions- und/oder Absorptionsmittel umfasst.

## Revendications

1. Dispositif de traitement thermique (4) de produits contenant des protéines, comprenant un moyen de transport (5) pour transporter lesdits produits contenant des protéines au moyen du dispositif (4) et plus loin qu'au moins une antenne de radiomètre micro-onde (1), dans lequel
l'antenne de radiomètre micro-onde (1) est située dans des moyens de protection (6) qui sont fixes et s'étendent au moins partiellement autour de la section transversale (5') du moyen de transport (5) et sont conçus pour isoler au moins partiellement l'antenne de radiomètre micro-onde (2) de sources externes de rayonnement électromagnétique micro-ondes,
**caractérisé en ce que**
la ou les antennes sont situées dans une chambre qui est ouverte vers le moyen de transport et qui est conçue pour canaliser le rayonnement reçu par l'antenne, dans lequel le moyen de protection (6) comprend deux fentes (9, 10) au niveau de son orifice d'entrée et de son orifice de sortie à travers lesquelles les moyens de transport (1) sont guidés, et dans lequel la hauteur de la fente peut être ajustée par rapport au produit qui est traité à présent dans le dispositif de traitement thermique.

2. Dispositif de traitement thermique selon la revendication 1, **caractérisé en ce que** les moyens de protection (6) s'étendent autour de toute la section transversale (5') du moyen de transport.

3. Dispositif de traitement thermique selon l'une quelconque des revendications précédentes, **caractérisé en ce que** le moyen de transport est une courroie.

4. Dispositif de traitement thermique selon l'une quelconque des revendications précédentes, **caractérisé en ce que** le moyen de protection (6) est au moins partiellement réalisé en un matériau qui réfléchit et/ou absorbe un rayonnement électromagnétique.

5. Dispositif de traitement thermique selon l'une quelconque des revendications précédentes, **caractérisé en ce que** le moyen de transport (5) est au moins partiellement réalisé en un matériau qui réfléchit et/ou absorbe un rayonnement électromagnétique.

6. Dispositif de traitement thermique selon l'une quelconque des revendications précédentes, **caractérisé en ce que** le moyen de protection (6) comprend un tunnel qui s'étend, de préférence, autour de toute la circonférence (5') du moyen de transport (5).

7. Dispositif de traitement thermique selon la revendication 6, **caractérisé en ce que** le tunnel comprend des moyens de réflexion et/ou d'absorption au niveau de sa surface interne.
